# EUROPÄISCHE PATENTANMELDUNG

(11) **EP 2 020 329 A1**
(43) Veröffentlichungstag der Anmeldung: **04.02.2009**
(21) Anmeldenummer: 08160403.5
(22) Anmeldetag: 15.07.2008
(51) Int. Cl.: B60K 17/22, F16C 3/02

(54) **Hybridwelle**

(30) Priorität: 02.08.2007 DE 102007036436
(71) Anmelder: Benteler Automobiltechnik GmbH, 33102 Paderborn (DE)
(72) Erfinder: Zuber, Armin, Dr., 33175 Bad Lippspringe (DE); Töws, Rudi, 33100 Paderborn (DE)
(74) Vertreter: Dantz, Jan Henning

(57) **Zusammenfassung**

Eine Hybridwelle (1), insbesondere eine Antriebswelle für ein Fahrzeug, umfasst eine Hohlwelle (2) aus Metall, an der mindestens eine Schicht (3) aus Carbonfasern festgelegt ist. Erfindungsgemäß sind die Carbonfasern unidirektional parallel zur Längsachse der Hohlwelle (2) angeordnet, so dass die Durchbiegung der Hybridwelle reduziert wird und das Gewicht der Hybridwelle vermindert wird.

## Beschreibung

Die vorliegende Erfindung betrifft eine Hybridwelle, insbesondere eine Antriebswelle für ein Fahrzeug, mit einer Hohlwelle aus Metall, an der mindestens eine Schicht aus Carbonfasern festgelegt ist.

Aus der DE 196 54 552 ist eine Antriebswelle für ein Fahrzeug bekannt, bei der ein Rohrkörper aus faserverstärktem Kunststoff vorgesehen ist. Bei einer solchen Antriebswelle besteht das Problem, dass abhängig von der Orientierung der Fasern des Kunststoffrohres eine maximale Belastung aufgenommen werden kann. Bei einer Antriebswelle können sowohl ein Torsionsmoment, als auch Biegekräfte auftreten. Für unterschiedliche Beanspruchungen ist eine solche Antriebswelle daher nur begrenzt geeignet.

Aus der DE 10 2005 005 729 ist ein Verfahren zum nachträglichen Verstärken von Rohren durch Faserverbundwerkstoffe bekannt, wobei hierfür in rohrförmige Kanäle Faserverbundwerkstoffe eingefügt werden. Dadurch soll insbesondere die Steifigkeit der Hohlprofile erhöht werden. Eine Verstärkung der Hohlprofile findet allerdings nur in den Bereichen der Hohlkammern statt, die mit dem Faserverbundwerkstoff gefüllt sind.

Ferner ist aus der DE 199 56 394 ein Verfahren zur Herstellung eines Profils eines Hybridwerkstoff bekannt, bei dem abwechselnd bandförmige Schichten aus unterschiedlichen Materialien verbunden sind. Neben einer Metallschicht ist eine Prepregschicht vorgesehen, die dann in mehreren Umformschritten bearbeitet werden können. Dadurch lassen sich Profile mit einer vorbestimmten Kontur und hoher Festigkeit herstellen.

In der DE197 07 125 ist ein Verfahren zur Herstellung eines unidirektionalen Geleges aus parallel einlaufenden Hochleistungsfasern bekannt, bei dem die Fasern zu einer Gelegebahn verarbeitet werden. Die Gelegebahn wird dann aufgewickelt und kann dann unter Einsatz von Wärme weiterverarbeitet werden. Solche unidirektionalen Fasergelege werden insbesondere bei dünnwandigen Bauteilen für Wandelemente, beispielsweise im Bootsbau eingesetzt.

Es ist daher Aufgabe der vorliegenden Erfindung eine Hybridwelle, insbesondere eine Antriebswelle für ein Fahrzeug zu schaffen, die bei geringem Eigengewicht eine hohe Steifigkeit besitzt.

Diese Aufgabe wird mit einer Hybridwelle mit den Merkmalen des Anspruches 1 gelöst.

Bei der erfindungsgemäßen Hybridwelle ist an der Hohlwelle aus Metall eine Schicht aus Carbonfasern festgelegt, die unidirektional parallel zur Längsachse der Hohlwelle angeordnet sind. Durch den Einsatz von unidirektional ausgerichteten Carbonfasern wird insbesondere die Biegesteifigkeit der Hohlwelle aus Metall erhöht, da die Schicht aus Carbonfasern insbesondere Zugbelastungen gut aufnehmen kann. Torsionsbelastungen hingegen werden durch die Hohlwelle aus Metall aufgenommen, so dass bei der Hybridwelle die Hohlwelle und die Schicht aus Carbonfasern jeweils für die Aufnahme einer bestimmten Belastung geeignet sind. Die Schicht aus den unidirektionalen Carbonfasern besitzt dabei ein geringes Eigengewicht, so dass trotz hoher Biegesteifigkeit die biegekritische Drehzahl bei gleichzeitiger Gewichtsreduzierung erhöht wird. Zudem lässt sich eine Hohlwelle einfacher und kostengünstiger mit unidirektional angeordneten Carbonfasern beschichten als mit bidirektionalen Fasern.

Gemäß einer bevorzugten Ausgestaltung der Erfindung ist die mindestens eine Schicht aus Carbonfasern außen um die Hohlwelle angeordnet. Dabei kann die hülsenförmige Schicht aus Carbonfasern mit der Hohlwelle aus Metall über Wärmeeinwirkung unter Einsatz entsprechender Klebemittel dauerhaft verbunden sein.

Vorzugsweise ist die mindestens eine Schicht aus Carbonfasern in derselben Länge ausgebildet wie die Hohlwelle. Die Schicht mit den Carbonfasern kann somit über die gesamte Länge die Hohlwelle verstärken und eine Durchbiegung der Hybridwelle gering halten, während die Hohlwelle aus Metall ein Torsionsmoment überträgt. Durch die Kombination von Hohlwelle aus Metall und der Schicht aus Carbonfasern kann die Hybridwelle insgesamt schlanker gestaltet werden.

Gemäß einer weiteren Ausgestaltung der Erfindung ist die mindestens eine Schicht aus Carbonfasern nur in einem mittleren biegekritischen Bereich der Hohlwelle angeordnet. Die gezielte Beschichtung der Hohlwelle in einem mittleren Bereich dient der Minimierung der Durchbiegung in dem biegekritischen Bereich, da endseitig an der Hohlwelle meist nur eine geringere Biegebelastung vorhanden ist. Dabei ist es möglich, dass mehrere Schichten aus Carbonfasern an der Hohlwelle vorgesehen sind, beispielsweise können die Schichten in Längsrichtung der Hohlwelle auch eine unterschiedliche Länge aufweisen, wobei eine weiter außenliegende Schicht kürzer ist als eine benachbarte innere Schicht. Dadurch kann eine Hohlwelle so beschichtet werden, dass der biegekritische mittlere Bereich von mehreren Schichten aus unidirektional angeordneten Carbonfasern umgeben ist, während an den weniger belasteten Endbereichen keine Schicht aus Carbonfasern oder nur weniger Schichten aus Carbonfasern vorgesehen sind.

Die Erfindung wird nachfolgend anhand zweier Ausführungsbeispiele mit Bezug auf die beigefügten Zeichnungen näher erläutert. Es zeigen:

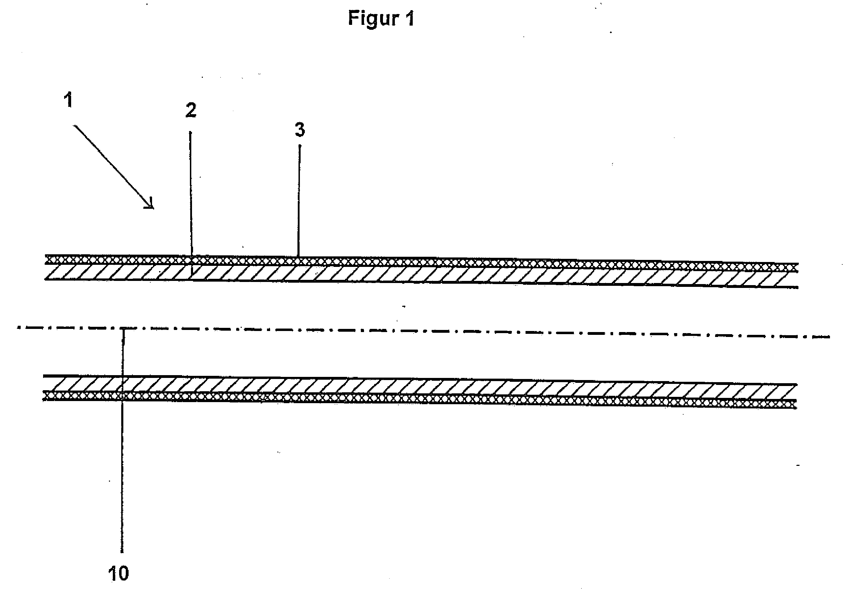

- Figur 1: eine geschnittene Seitenansicht eines ersten Ausführungsbeispieles einer erfindungsgemäßen Hybridwelle, und
- Figur 2: eine geschnittene Seitenansicht eines zweiten Ausführungsbeispieles einer erfindungsgemäßen Hybridwelle.

Die Hybridwelle 1 umfasst eine Hohlwelle 2 aus Metall, vorzugsweise aus Stahl oder Aluminium, die von einer Schicht 3 aus Carbonfasern allseitig umgeben ist. Die Schicht 3 aus Carbonfasern ist dabei dünner ausgebildet als die Hohlwelle 2, wobei die Carbonfasern sich parallel zu einer Längsachse 10 der Hohlwelle 2 erstrecken. Die Hohlwelle 2 und die Schicht 3 besitzen dieselbe Länge und eine gleichmäßige Dicke.

Wegen der Schicht aus unidirektionalen Carbonfasern wird die Hohlwelle 2 für eine Biegebelastung verstärkt, da die Carbonfasern auf Zug beansprucht werden und für diese Belastung eine sehr hohe Festigkeit aufweisen. Die Belastung der Schicht 3 auf Schub ist gering, weil die Hohlwelle 2 aus Metall ein Torsionsmoment überträgt. Trotz hoher Steifigkeit der Hybridwelle 1 durch die Hohlwelle 2 aus Metall und die Schicht 3 aus unidirektionalen Carbonfasern besitzt die Hybridwelle 1 nur ein geringes Eigengewicht verglichen mit einer rein metallischen Hohlwelle, die für vergleichbare Belastungen ausgelegt ist.

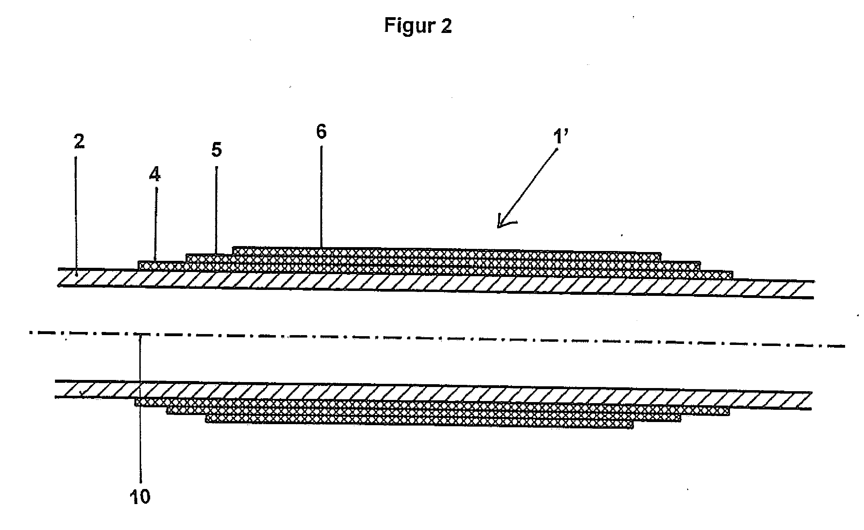

In Figur 2 ist eine weitere Ausführungsform einer erfindungsgemäßen Hybridwelle 1' gezeigt, bei der eine Hohlwelle 2 aus Metall, vorzugsweise Stahl oder Aluminium vorgesehen ist. Bei dieser Hybridwelle 1' ist die Hohlwelle 2 in Längsrichtung länger ausgebildet als eine umgebene Schicht 4 aus unidirektional angeordneten Carbonfasern. Bei der Schicht 4 sind die Carbonfasern parallel zu einer mittleren Längsachse 10 der Hohlwelle 2 angeordnet.

Ferner ist an einer ersten Schicht 4 aus Carbonfasern eine zweite Schicht 5 aus unidirektional angeordneten Carbonfasern 5 angeordnet, die wiederum eine kürzere Länge besitzt als die Schicht 4. Die zweite Schicht 5 aus unidirektional angeordneten Carbonfasern 5 ist zumindest in einem mittleren Bereich wieder von einer dritten Schicht 6 aus unidirektional angeordneten Carbonfasern umgeben. Die jeweils innen liegende Schicht besitzt dabei eine größere Länge als eine äußere Schicht. Dadurch wird erreicht, dass gerade in einem mittleren Bereich, an dem hohe Biegelasten auftreten, durch mehrere Schichten 4, 5 und 6 aus unidirektional angeordneten Carbonfasern eine besonderes hohe Biegesteifigkeit vorhanden ist, was die biegekritische Drehzahl erhöht. In einem endseitigen Bereich, bei dem geringere Biegelasten auftreten, sind dann weniger Schichten aus unidirektional angeordneten Carbonfasern bzw. keine Schicht um die Hohlwelle 2 vorgesehen.

Die Anzahl der Schichten 4, 5 und 6 kann dabei entsprechend der zu erwartenden Belastung gewählt werden.

## Patentansprüche

1. Hybridwelle (1, 1'), insbesondere Antriebswelle für ein Fahrzeug, mit einer Hohlwelle (2) aus Metall, an der mindestens eine Schicht (3, 4, 5, 6) aus Carbonfasern festgelegt ist, **dadurch gekennzeichnet, dass** die Carbonfasern unidirektional parallel zur Längsachse der Hohlwelle (2) angeordnet sind.

2. Hybridwelle nach Anspruch 1, **dadurch gekennzeichnet, dass** die mindestens eine Schicht (3, 4, 5, 6) aus Carbonfasern außen um die Hohlwelle (2) angeordnet ist.

3. Hybridwelle nach Anspruch 1 oder 2, **dadurch gekennzeichnet, dass** die mindestens eine Schicht (3) aus Carbonfasern dieselbe Länge besitzt wie die Hohlwelle (2).

4. Hybridwelle nach Anspruch 1 oder 2, **dadurch gekennzeichnet, dass** die mindestens eine Schicht (4, 5, 6,) aus Carbonfasern nur in einem mittleren biegekritischen Bereich der Hohlwelle (2) angeordnet ist.

5. Hybridwelle nach einem der Ansprüche 1 bis 4, **dadurch gekennzeichnet, dass** mehrere Schichten (4, 5, 6) aus Carbonfasern an der Hohlwelle (2) vorgesehen sind.

6. Hybridwelle nach Anspruch 5, **dadurch gekennzeichnet, dass** die Schichten (4, 5, 6) aus Carbonfasern in Längsrichtung der Hohlwelle (2) eine unterschiedliche Länge aufweisen, wobei eine weiter außen liegende Schicht (5, 6) kürzer ist als eine benachbarte innere Schicht (4, 5).

7. Hybridwelle nach einem der Ansprüche 1 bis 6, **dadurch gekennzeichnet, dass** die Hohlwelle (2) aus Stahl oder Aluminium hergestellt ist.
